## Europäisches Patentamt
## European Patent Office
## Office européen des brevets

(11) Veröffentlichungsnummer: **0 262 350 B1**

# EUROPÄISCHE PATENTSCHRIFT

(45) Veröffentlichungstag der Patentschrift: 02.10.91

(51) Int. Cl.⁵: **C01B 15/023, C01B 15/013**

(21) Anmeldenummer: **87111501.0**

(22) Anmeldetag: **08.08.87**

Die Akte enthält technische Angaben, die nach dem Eingang der Anmeldung eingereicht wurden und die nicht in dieser Patentschrift enthalten sind.

(54) **Verfahren zur Herstellung von Wasserstoffperoxid.**

(30) Priorität: 03.10.86 DE 3633672

(43) Veröffentlichungstag der Anmeldung:
06.04.88 Patentblatt 88/14

(45) Bekanntmachung des Hinweises auf die Patenterteilung:
02.10.91 Patentblatt 91/40

(84) Benannte Vertragsstaaten:
AT BE CH DE ES FR GB GR IT LI LU NL SE

(56) Entgegenhaltungen:
AT-B- 228 743        FR-A- 1 194 436
FR-A- 1 221 679      FR-A- 1 234 731
FR-A- 1 412 812      FR-A- 1 492 339
FR-E- 81 626         GB-A- 700 864
US-A- 2 901 323

CHEMICAL ABSTRACTS, Band 55, Nr. 10, 15. Mai 1961, Zusammenfassung Nr. 99811g, Columbus, Ohio, US; & JP-A-2361 (EDOGAWA CHEMICAL CO., LTD) 17-03-1960

(73) Patentinhaber: **Degussa Aktiengesellschaft**
**Weissfrauenstrasse 9**
**W-6000 Frankfurt am Main 1(DE)**

(72) Erfinder: **Kunkel, Wolfgang, Dr.**
**Niederräder Landstrasse 66**
**W-6000 Frankfurt 71(DE)**
Erfinder: **Goor, Gustaaf, Dr.**
**Vosswaldestrasse 7**
**W-6450 Hanau 9(DE)**
Erfinder: **Kemnade, Jörg, Dr.**
**Altenhainer Strasse 21a**
**W-6233 Kelkheim-Fischbach(DE)**

## Beschreibung

Die Erfindung richtet sich auf ein verbessertes Verfahren zur Herstellung von Wasserstoffperoxid nach dem Anthrachinonverfahren.

Bekanntlich wird bei dem sogenannten Anthrachinonverfahren (siehe hierzu zusammenfassende Darstellung in Ullmanns Enzyklopädie der techn. Chemie, 4. neubearbeitete und erweiterte Auflage, Band 17, Seite 697 - 704) ein Anthrachinonderivat, der Reaktionsträger, in einem Lösungsmittel oder Lösungsmittelgemisch gelöst und die so erhaltene Arbeitslösung in Gegenwart eines Katalysators hydriert. Dabei wird ein Teil des Anthrachinonderivates in das entsprechende Anthrahydrochinonderivat überführt. Nach Abfiltration des Hydrierkatalysators wird die Arbeitslösung mit Sauerstoff oder einem sauerstoffhaltigen Gas (meist Luft) begast, wobei unter Bildung von Wasserstoffperoxid das Anthrachinonderivat zurückgebildet wird.

Nach Extraktion des in der Arbeitslösung gelösten Wasserstoffperoxids mit Wasser kann die Arbeitslösung wieder der Hydrierstufe zugeführt werden. Durch ständige Wiederholung der Einzelvorgänge gelangt man so zu einem Kreisprozeß, bei dem aus den Gasen Wasserstoff und Sauerstoff Wasserstoffperoxid synthetisiert wird.

Unabhängig davon, welche technische Vorrichtung zur Extraktion des Wasserstoffperoxids verwendet wird, werden nach der Extraktionsstufe immer 2 Phasen erhalten, die im $H_2O_2$-Gehalt abgereicherte Arbeitslösungsphase (Raffinat) und die wäßrige Wasserstoffperoxidphase (Extrakt).

Beide Phasen enthalten in geringen Mengen jeweils feinst dispergiert einen Anteil der jeweils anderen Phase, d.h. in der Arbeitslösungsphase sind feinste Tröpfchen eines verdünnten wäßrigen Wasserstoffperoxids enthalten, und in der wäßrigen Wasserstoffperoxidphase sind geringe Mengen Arbeitslösungströpfchen dispergiert.

Üblicherweise wird die Arbeitslösungsphase zur Abscheidung der wäßrigen dispergierten Phase durch handelsübliche Koagulatoren und Separatoren, die sog. "Wasserabscheider", geleitet. Bei der in den "Wasserabscheidern" abgetrennten wäßrigen Phase handelt es sich um eine verdünnte wäßrige Wasserstoffperoxidlösung.

Zur Reinigung des wäßrigen Wasserstoffperoxidextrakts wurden schon eine Reihe von Maßnahmen vorgeschlagen.

So wird z.B. die Reinigung der wäßrigen $H_2O_2$-Lösungen durch eine adsorptive Behandlung vorgenommen. Folgende Adsorbentien wurden bereits vorgeschlagen:
Aktivkohle (US-PS 2,919,975), Aktivkohle in Form feinverteilter Holzkohle, MgO, frisch gefälltes $Al(OH)_3$ oder $Mg(OH)_2$ (GB-PS 817 556), eine teilweise durch Adsorption organischer, gegenüber $H_2O_2$ inerter Stoffe deaktivierte Aktivkohle (DE-PS 15 67 814), Äthylenpolymerisate mit einem Molekulargewicht über 2000 (GB-PS 794 433), wasserunlösliche, feste, nichtpolymere organische Substanzen mit Molekulargewichten zwischen etwa 170 und 1000 (DE-PS 11 08 191) und poröse synthetische Harze, die frei von chemischen Funktionen sind (DE-OS 17 92 177).

Da Aktivkohle das zu reinigende Wasserstoffperoxid zersetzt, wird die Behandlung bevorzugt bei tiefen Temperaturen durchgeführt. Außerdem werden die Adsorbentien bei fortschreitender Reinigung mit den Verunreinigungen beladen und müssen in einem gesonderten Kreislauf mit Hilfe von Lösungsmitteln regeneriert werden.

Es ist ferner bekannt (US-PS 3,043,666 - FMC), die wäßrige $H_2O_2$-Lösung zunächst mit einem Selektivlösungsmittel für Chinone zu behandeln und das dabei anfallende Raffinat in Gegenwart eines Stabilisators zu erhitzen, bis eine Färbung eintritt. Die gelösten organischen Bestandteile sind dabei durch Wasserstoffperoxid oxydiert worden und werden anschließend erneut extraktiv behandelt und schließlich destilliert. Diese Maßnahmen sind so aufwendig, daß sich die Anwendung nur bei Sonderqualitäten rechtfertigt.

Bei anderen Reinigungsverfahren wird der wäßrige Wasserstoffperoxidextrakt mit einem Lösungsmittel extrahiert. Als Lösungsmittel kann ein inerter flüssiger Kohlenwasserstoff mit einem Siedepunkt bei Atmosphärendruck von nicht oberhalb 145 °C verwendet (DE-AS 10 36 225), oder es können Kohlenwasserstoffe mit Siedepunkten zwischen 50 und 120 °C und Löslichkeiten in Wasser unter 0,1 % eingesetzt werden (JP-PS 35-2361). Sogar bestimmte chlorierte Kohlenwasserstoffe sind vorgeschlagen worden (DE-AS 11 35 866). Bei den extraktiven Reinigungsverfahren, die sich eines niedrigsiedenden Lösungsmittels bedienen, müssen nach der Reinigung Lösungsmittelreste aus dem $H_2O_2$ abgestreift werden; weiterhin muß das beladene Lösungsmittel in einem gesonderten Kreislauf - also aufwendig - regeneriert werden. Schließlich haben viele der vorgeschlagenen Lösungsmittel einen niedrigen Flammpunkt.

Die hier aufgeführten Nachteile sollen sich vermeiden lassen, wenn die Reinigungsstufe in einem Lösungsmittelgemisch, bestehend aus Aromaten, mit einem Siedebereich von 145 - 200 °C (GB-PS 841 323) durchgeführt wird.

Ferner ist bekannt, zur Reinigung der rohen wäßrigen Wasserstoffperoxidlösungen ein Gemisch aus aromatischen Kohlenwasserstoffen mit einem Siedepunkt oberhalb 145 °C und Methylcyclohexylacetat in bestimmten Verhältnissen zu verwenden (DE-AS 14 67 091).

Nach dem Stand der Technik wird die Extraktion der Verunreinigungen in Sprühkolonnen, in Siebbodenkolonnen oder in mit Füllkörpern gefüllten Kolonnen nach dem Gegenstromverfahren durchgeführt. In einer nachgeschalteten Verweilstrecke werden mitgerissene Lösungsmitteltropfen aus der wäßrigen Phase abgetrennt.

Bekanntlich nimmt zwar der Stoffaustausch bei einem Extraktionsvorgang mit zunehmender Phasengrenzfläche zu; andererseits erfolgt aber die Trennung eines Zweiphasengemisches umso leichter, je größer die Tropfen der dispergierten Phase sind. Diese zwei gegenläufigen Tatsachen führen dazu, daß das Ergebnis bei einer extraktiven Reinigung von wäßrigen Wasserstoffperoxid-Lösungen mit Lösungsmitteln in Kolonnen beschränkt ist.

Die FR-A 1 234 731 lehrt ein Verfahren zur Reinigung der Arbeitslösung, um ein in einigen Fällen während des kontinuierlich betriebenen Kreisprozesses auftretendes Ansteigen des Gehalts an nicht flüchtigem Kohlenstoff im Wasserstoffperoxidextrakt zu vermeiden. Die Reinigung besteht in einer Wäsche der Arbeitslöung mit Wasser, welche vorzugsweise nach der Extraktion des Wasserstoffperoxids aus der oxidierten Arbeitslösung durchgeführt wird. Durch diese in der Art einer Extraktion durchgeführte Wäsche können die Ausbeute an Wasserstoffperoxid erhöht und der Gehalt an nicht flüchtigem Kohlenstoff im $H_2O_2$-Rohextrakt auf einen verfahrensspezifischen Grenzwert zurückgeführt bzw. konstantgehalten werden.

Die FR-A 1 492 339 richtet sich auf die Koaleszenz von Emulsionen aus der Arbeitslösung und Wasser im Rahmen des Verfahrens zur Herstellung von Wasserstoffperoxid. Die Trennung der beiden Phasen der Emulsion erfolgt in Koaleszern, welche aus einer mikroporösen Schicht aus Glasfasern und einer großmaschigen Schicht zur Tropfenvergrößerung aus Polyethylen, Polypropylen oder Polytetrafluorethylen aufgebaut sind.

Aufgabe der Erfindung ist, die nach der Extraktionsstufe anfallenden Lösungen, nämlich die an Wasserstoffperoxid abgereicherte Arbeitslösung und den wäßrigen Wasserstoffperoxidextrakt nachzureinigen, um die Ausbeute an Wasserstoffperoxid zu erhöhen und den Kohlenstoffgehalt und die Farbzahl des Wasserstoffperoxids zu erniedrigen. Durch die zu treffenden Maßnahmen sollten durch Feuchtigkeit in der Arbeitslösung bedingte Störungen während des Betriebes vermieden werden; ferner sollte auch eine bei gestörter Extraktion erhaltene trübe Wasserstoffperoxidlösung in ein Produkt guter Qualität überführt werden können.

Gefunden wurde ein Verfahren zur Herstellung von Wasserstoffperoxid nach dem sogenannten Anthrachinonverfahren, wobei die bei der Extraktion mit Wasser erhaltene an Wasserstoffperoxid abgereicherte Arbeitslösung, welche noch geringe Mengen verdünnter wäßriger Wasserstoffperoxidlösung feinst dispergiert enthält, und der Wasserstoffperoxidextrakt, welcher noch geringe Mengen an Arbeitslösung feinst disperigert enthält, nachgereinigt werden, indem die jeweils disperigerte Phase unter Verwendung von Coalescern, welche eine oder mehrere Filterschichten aus Glasfasern enthalten, einen tropfenvergrößernden Aufbau aufweisen und in einer Separatoreinheit angeordnet sind, von der jeweils anderen Phase abgetrennt wird, das dadurch gekennzeichnet ist, daß man jeweils vor Eintritt in die Coalescerstufe die an Wasserstoffperoxid abgereicherte Arbeitslösung mit 1 bis 5 Vol.-% Wasser oder niedrigkonzentrierter wäßriger Wasserstoffperoxidlösung, bezogen auf die an Wasserstoffperoxid abgereicherte Arbeitslösung, und den Wasserstoffperoxidextrakt mit 0,5 bis 5 Vol.-% eines aus für das Anthrachinonverfahren bekannten Chinonlösern bestehenden Lösegemisches, bezogen auf den Wasserstoffperoxidextrakt, versetzt und vermischt und die Coalescer Glasfaser-Filterschichten aus thermisch entschlichtetem Glasfaserfilamentgarn enthalten.

Es werden beide nach der Extraktion mit Wasser anfallenden Phasen, d. h. die Arbeitslösung (Raffinat) und die wäßrige Wasserstoffperoxidlösung (Extrakt) erfindungsgemäß behandelt.

Der Arbeitslösung können außer Wasser auch - wie gesagt - wäßrige Wasserstoffperoxidlösungen zugesetzt werden. Die Konzentrationen dieser letzteren werden vorzugsweise niedrig sein. Besonders bevorzugt versetzt man die Arbeitslösung mit Wasser, dispergiert dieses und trennt anschließend die dispergierte wäßrige Phase von der Arbeitslösung mit Hilfe von Coalescern ab. Wasser oder wäßrige Wasserstoffperoxidlösungen werden der Arbeitslösung in Mengen von 1 - 5 Vol.-%, bezogen auf die Arbeitslösung, zugegeben. Besonders bevorzugt gibt man 1 - 3 Vol.-% Wasser, bezogen auf die Arbeitslösung, zu.

Als Bestandteile des Lösegemischs zur Zugabe zu dem Wasserstoffperoxidextrakt kommen im Prinzip alle für das Anthrachinonverfahren bekannten Chinonlöser infrage. Unter Chinonlöser werden sowohl hierfür bekannte reine Stoffe als auch Mischungen von solchen verstanden. Häufig wird man den Chinonlöser wählen, der schon in der Arbeitslösung vorhanden ist. Als Chinonlöser hat sich ein Aromatenbenzingemisch im Siedebereich von 180 - 220 °C als besonders gut geeignet erwiesen.

Das Lösegemisch wird in Mengen von 0,5 - 5 Vol.-%, bezogen auf den Wasserstoffperoxidextrakt, verwendet. Bezogen auf den Wasserstoffperoxidextrakt setzt man diesem besonders bevorzugt 1-3 Vol.-% eines Chinonlösers zu.

Sowohl die wäßrige Phase als auch das organische Lösegemisch werden dem nach der Extraktionsstufe anfallenden Raffinat bzw. Wasserstoffperoxidextrakt zugesetzt und mit ihnen in üblichen Mischern vermischt; bevorzugt ist eine intensive Vermischung.

Der unter anderem vom Aufbau und der Filtrationsfeinheit der eingesetzten Coalescer abhängige günstigste Dispergiergrad der zugesetzten Phase läßt sich durch Vorversuche leicht ermitteln.

Anschließend wird die Abtrennung der jeweiligen dispergierten Phase mit Hilfe von in einer geeigneten Separatoreinheit montierten Coalescern vorgenommen. Diese Coalescer sind, wie die übrigen Apparateteile, aus gegenüber Wasserstoffperoxid beständigem Material gefertigt. Es können ein, zwei oder mehrere Coalescer verwendet werden. Zwei oder mehrere Coalescer schaltet man in Kreuzstrom- oder Gegenstromanordnung hintereinander.

Unter Coalescern, die erfindungsgemäß eingesetzt werden, werden solche verstanden, wie sie beispielsweise beschrieben sind in Chemical Engineering Progess Vol 59, No. 9, Seite 87 - 88 (1963) und GB-PS 1 427 704. Es sind dies Coalescer mit tropfenvergrößerndem Aufbau, welche eine oder mehrere Filterschichten aus thermisch entschlichtetem Glasfaserfilamentgarn enthalten. Die günstigste Belastung der Coalescer, d.h. die durchgesetzte Menge Dispersion pro Zeiteinheit und Filterelement, wird der Fachmann am besten durch orientierende Versuche ermitteln.

Das erfindungsgemäße Verfahren kann man bei Temperaturen von 10 - 70 °C durchführen, wobei jedoch höhere bzw. niedrigere Temperaturen nicht ausgeschlossen sind. Bevorzugt wird man bei 20 - 50 °C arbeiten, wobei das Raffinat und der $H_2O_2$-Extrakt bei verschiedenen Temperaturen erfindungsgemäß behandelt werden können.

Durch die an sich widersinnige Maßnahme, die dispergierte Phase durch nochmalige gezielte Zugabe dieser Phase praktisch vollständig aus dem Raffinat und/oder Extrakt herauslösen zu wollen, wird der Auswaschgrad für Wasserstoffperoxid einerseits aus dem Raffinat, sowie andererseits für Verunreinigungen, die zu Färbungen und einem zu hohen Kohlenstoffgehalt des Wasserstoffperoxids führen würden, aus dem Extrakt wesentlich erhöht. Die Ausbeute sowie die Farbe und der Kohlenstoffgehalt des Wasserstoffperoxids sind durch das erfindungsgemäße Verfahren wesentlich verbessert (Beispiele 2 und 4).

Durch Erhöhung der dispergierten, wäßrigen Phase im Raffinat, d.h. in der Arbeitslösung, mit anschließender Abtrennung der dispergierten Phase durch den oder die Coalescer ist es möglich, sowohl die Gesamtausbeute an Wasserstoffperoxid zu erhöhen als auch den Anstieg der relativen Feuchte in der Arbeitslösung zu verhindern, siehe Beispiele 3 und 4. Gerade das Ansteigen der Feuchte im Raffinat war aber stets als sehr störend empfunden worden. Ein derartiger Erfolg, nämlich das Konstanthalten der Feuchte während des Betriebes, war nicht vorhersehbar gewesen.

Unter der relativen Feuchte ist dabei d als in Prozent ausgedrückte Verhältnis des in der ständig recyclierten Arbeitslösung tatsächlich vorhandenen Feuchtegehalts zu dem der herrschenden Temperatur entsprechenden Sättigungsgehalt der reinen Arbeitslösung zu verstehen.

Es folgen die Beispiele 1 - 4.

In allen Beispielen wird der gleiche Reaktionsträger, nämlich ein Gemisch aus 2-Ethylanthrachinon und 2-Ethyltetrahydroanthrachinon, und die gleiche Arbeitslösung mit Trioctylphosphat als Hydrochinonlöser und einem Aromatenbenzin mit einem Siedebereich von 185 - 205 °C als Chinonlöser eingesetzt.

Beispiel 1 (Vergleichsbeispiel nach Stand der Technik)

In einer Produktionsanlage für Wasserstoffperoxid nach dem Anthrachinonverfahren ist zur Reinigung des die Extraktionsstufe verlassenden wäßrigen Wasserstoffperoxids eine Füllkörperkolonne in Betrieb, in der Wasserstoffperoxid und der Chinonlöser der Arbeitslösung im Gegenstrom gegeneinander geführt werden. Die wäßrige Wasserstoffperoxidphase durchströmt dabei als dispergierte Phase die Kolonne von oben nach unten, der Chinonlöser wird als kontinuierliche Phase von unten nach oben geführt.

Der Wirkungsgrad der Reinigung wird durch die Abnahme des Kohlenstoffgehaltes in mg C/l wäßriges $H_2O_2$-Rohprodukt ermittelt und beträgt bei störungsfreiem Betrieb der Anlage im Mittel 30 mg C/l $H_2O_2$ bei einem Anfangswert von 220 mg C/l wäßriges $H_2O_2$-Rohprodukt.

Gelegentlich in der Anlage auftretende Störungen führen zu einem opal bis leicht trüb aussehenden Rohprodukt. In diesem Falle ist es nicht möglich, die Trübung durch diese Reinigungsstufe zu beseitigen, d.h. nach der Reinigungsstufe wird ein Produkt erhalten, das einer weiteren Behandlung bedarf. Zusätzlich besitzt das Wasserstoffperoxid auf Grund gelöster Chromophore eine sehr leicht gelbliche Farbe, die in einem Farbwert-Standardtest Farbwert 3 anzeigt. Zur Ermittlung des Farbwertes werden Eichlösungen von FeCl₃ in destilliertem Wasser nach folgender Skala angesetzt:

| Farbwert | mg $FeCl_3/l$ |
|----------|---------------|
| 0 | 54,0 |
| 1 | 162,6 |
| 2 | 270,4 |
| 3 | 378,6. |

Anschließend erfolgt in Glasrohren der Farbvergleich zwischen der Wasserstoffperoxid-Probe und den FeCl₃-Lösungen.

Beispiel 2

Im unter Beispiel 1 beschriebenen Betrieb wird ein Teilstrom des die Extraktionsstufe verlassenden wäßrigen Wasserstoffperoxids über eine Coalescerstufe, bestehend aus zwei hintereinandergeschalteteten Coalescer-Elementen, enthaltend eine Filterschicht aus thermisch entschlichtetem Glasfaserfilamentgarn sowie Schichten zur Tropfenvergrößerung, geführt. Der aus der Extraktionsstufe abfließenden Wasserstoffperoxidphase werden im Gegenstromverfahren 2 Volumteile eines Aromatenbenzins mit Siedebereich von 182 - 214 °C auf 100 Volumteile Wasserstoffperoxidextrakt zugefügt, die beiden Phasen mit einer drehzahlgeregelten Pumpe innig vermischt und bei 20 - 25 °C in den Coalescer-Elementen getrennt.

Der Wirkungsgrad der Stufe, wiederum ausgedrückt in mg C/l H₂O₂,beträgt 100 - 120 mg C/l H₂O₂ gegenüber dem gleichen ursprünglichen C-Gehalt wie in Beispiel 1. Der Farbwert, gemessen mit der FeCl₃-Skala, sinkt auf 0 - 1. Bei gelegentlich auftretenden Störungen in der Extraktionsstufe der Anlage, bei der ein trübes Produkt erhalten wird, erfolgt in der Coalescerstufe immer eine vollständige Reinigung, d.h. das die Coalescerstufe verlassende Wasserstoffperoxid ist stets von gleichbleibender guter Qualität.

Beispiel 3 (Vergleichsbeispiel)

In dem unter Beispiel 1 beschriebenen Betrieb wird die Arbeitslösung (Raffinat), die die Extraktionsstufe verläßt, zur Abtrennung der in ihr dispergierten verdünnten wäßrigen Wasserstoffperoxidphase ohne vorherige Zugabe der dispergierten Phase durch einen sog. Wasserabscheider geführt, der mit Coalescer-Elementen bestückt ist.

Jeweils nach Inbetriebnahme der Einheit mit neuen Elementen wird eine fast 100 %ige Abtrennung der dispergierten wäßrigen Phase erreicht, d.h. der Feuchtegehalt der Arbeitslösung nach der Wasserabscheidestufe beträgt 100 - 102 % rel. Feuchte. Mit fortschreitender Zeit steigt jedoch der Feuchtegehalt in der Arbeitslösung langsam über den Ausgangswert an, d.h. die Arbeitslösung enthält einen Anteil nicht abgetrennter dispergierter wäßriger Phase. Nach etwa einem Jahr wird ein Wert von ca. 150-180 % rel. Feuchte erreicht, die Coalescer-Elemente müssen ausgebaut und durch neue Elemente ersetzt werden.

Gelegentlich in der Extraktionsstufe auftretende Störungen, die zu einem vermehrten Anfall dispergierter wäßriger Phase in der Arbeitslösung führen, ergeben kurzzeitig, je nach Stärke der Störung, einen Anstieg der rel. Feuchte bis zu 300 %.

Beispiel 4

In dem unter Beispiel 1 beschriebenen Betrieb werden in die Arbeitslösung (Raffinat) ca. 2 Vol.-% Wasser, bezogen auf die Arbeitslösung, vor Eintritt in die Coalescerstufe eindosiert und intensiv gemischt. Über eine Betriebszeit von 12 Monaten hinweg wird in der die Coalescerstufe verlassenden Arbeitslösung konstant eine rel. Feuchte von 100 % gefunden. Durch Aufarbeitung der abgetrennten wäßrigen, geringfügig Wasserstoffperoxid enthaltenden Phase steigt die H₂O₂-Ausbeute um 0,2 - 0,3 %. Auch bei gelegentlich auftretenden Störungen in der Extraktionsstufe wird in der Arbeitslösung nach der Coalescerstufe stets eine rel. Feuchte von 100 % gefunden. Diese ausgezeichnete Leistung der Abscheidestufe wurde auch noch nach mehr als 18monatigem Betrieb festgestellt.

**Patentansprüche**

1. Verfahren zur Herstellung von Wasserstoffperoxid nach dem sogenannten Anthrachinonverfahren, wobei die bei der Extraktion mit Wasser erhaltene an Wasserstoffperoxid abgereicherte Arbeitslösung, welche noch geringe Mengen verdünnter wäßriger Wasserstoffperoxidlösung feinst dispergiert enthält, und der Wasserstoffperoxidextrakt, welcher noch geringe Mengen an Arbeitslösung feinst disperigert enthält, nachgereinigt werden, indem die jeweils disperigerte Phase unter Verwendung von Coalescern, welche eine oder mehrere Filterschichten aus Glasfasern enthalten, einen tropfenvergrößernden Aufbau aufweisen und in einer Separatoreinheit angeordnet sind, von der jeweils anderen Phase abgetrennt wird, dadurch gekennzeichnet, daß man jeweils vor Eintritt in die Coalescerstufe die an Wasserstoffperoxid abgereicherte Arbeitslösung mit 1 bis 5 Vol.-% Wasser oder niedrigkonzentrierter wäßriger Wasserstoffperoxidlösung, bezogen auf die an Wasserstoffperoxid abgereicherte Arbeitslösung, und den Wasserstoffperoxidextrakt mit 0,5 bis 5 Vol.-% eines aus für das Anthrachinonverfahren bekannten Chinonlösern bestehenden Lösegemisches, bezogen auf den Wasserstoffperoxidextrakt, versetzt und vermischt und die Coalescer Glasfaser-Filterschichten aus thermisch entschlichtetem Glasfaserfilamentgarn enthalten.

2. Verfahren nach Anspruch 1, dadurch gekennzeichnet, daß man der an Wasserstoffperoxid abgereicherten Arbeitslösung 1 bis 3 Vol.-% Wasser, bezogen auf die abgereicherte Arbeitslösung, zusetzt.

3. Verfahren nach Anspruch 1 oder 2, dadurch kennzeichnet, daß man dem wäßrigen Wasserstoffperoxidextrakt 1 bis 3 Vol.-% Chinonlöser, bezogen auf den Wasserstoffperoxidextrakt, zusetzt.

4. Verfahren nach einem oder mehreren der Ansprüche 1 bis 3, dadurch gekennzeichnet, daß man jeweils zwei hintereinandergeschaltete Coalescer zur Reinigung des Wasserstoffperoxidextraktes und der an Wasserstoffperoxid abgereicherten Arbeitslösung verwendet.

## Claims

1. A process for the production of hydrogen peroxide by the so-called anthraquinone method, the hydrogen-peroxide-depleted working solution obtained during the extraction with water, which still contains small quantities of dilute aqueous hydrogen peroxide solution in very fine dispersion, and the hydrogen peroxide extract, which still contains small quantities of working solution in very fine dispersion, being subsequently purified by separation of the particular dispersed phase from the other phase using coalescers which contain one or more filter layers of glass fibres, have a droplet-enlarging structure and are arranged in a separator unit, characterized in that 1 to 5% by volume water or a low-concentration aqueous hydrogen peroxide solution, based on the hydrogen-peroxide-depleted working solution, are added to the hydrogen-peroxide-depleted working solution and 0.5 to 5% by volume of a solvent mixture consisting of known quinone solvents for the anthraquinone method, based on the hydrogen peroxide extract, are added to the hydrogen peroxide extract before entry into the coalescer stage, followed by mixing and the coalescers contain glass-fibre filter layers of thermally desized glass fibre filament yarn.

2. A process as claimed in claim 1, characterized in that 1 to 3% by volume water, based on the hydrogen-peroxide-depleted working solution, are added to the depleted working solution.

3. A process as claimed in claim 1 or 2, characterized in that 1 to 3% by volume quinone solvent, based on the hydrogen peroxide extract, are added to the aqueous hydrogen peroxide extract.

4. A process as claimed in one or more of claims 1 to 3, characterized in that two coalescers arranged in tandem are used to purify the hydrogen peroxide extract and the hydrogen-peroxide-depleted working solution.

## Revendications

1. Procédé d'obtention de peroxyde d'hydrogène selon le procédé dit procédé à l'anthraquinone dans lequel la solution de travail obtenue lors de l'extraction par de l'eau appauvrie en peroxyde d'hydrogène, contenant encore de petites quantités de solution aqueuse diluée de peroxyde d'hydrogène très finement dispersées, et l'extrait de peroxyde d'hydrogène qui contient en dispersion encore de faibles quantités de solution de travail, sont purifiés finalement en séparant à chaque fois de l'autre phase, la phase respectivement dispersée par utilisation d'appareils de coalescence contenant une ou plusieurs couches de filtres en fibre de verre, possédant une construction qui augmente la taille des gouttes et qui sont disposés dans une unité séparateur, procédé caractérisé en ce que l'on ajoute à chaque fois avant l'entrée dans l'étape de l'appareil de coalescence, à la solution de travail appauvrie en peroxyde d'hydrogène 1 à 5 % en volume d'eau ou d'une solution aqueuse faiblement concentrée de peroxyde d'hydrogène, rapportés à la solution de travail appauvrie en peroxyde d'hydrogène, et à l'extrait de peroxyde d'hydrogène 0,5 à 5 % en volume d'un mélange de solvant consistant en dissolvants des quinones connus pour le procédé à l'anthraquinone, rapportés à l'extrait de peroxyde d'hydrogène, puis on mélange et en ce que les appareils de coalescence contiennent des couches de filtre en fibre de verre à base de fils continus de fibres de verre thermiquement désencollés.

2. Procédé selon la revendication 1, caractérisé en ce que l'on ajoute à la solution de travail appauvrie en peroxyde d'hydrogène 1 à 3 % en volume d'eau, rapporté à la solution de travail appauvrie.

3. Procédé selon la revendication 1 ou 2, caractérisé en ce que l'on ajoute à l'extrait aqueux de peroxyde d'hydrogène 1 à 3 % en volume d'un dissolvant de quinone, rapporté à l'extrait de peroxyde d'hydrogène.

4. Procédé selon une ou plusieurs des revendications 1 à 3, caractérisé en ce que l'on utilise respectivement deux coalesceurs montés en série en vue de la purification de l'extrait de peroxyde d'hydrogène et de la solution de travail appauvrie en peroxyde d'hydrogène.